**Europäisches Patentamt**

**European Patent Office**

**Office européen des brevets**

(19)

(11) Veröffentlichungsnummer : **0 422 446 B1**

(12) # EUROPÄISCHE PATENTSCHRIFT

(45) Veröffentlichungstag der Patentschrift :
**24.11.93 Patentblatt 93/47**

(51) Int. Cl.⁵ : **B60J 3/02**

(21) Anmeldenummer : **90118449.9**

(22) Anmeldetag : **26.09.90**

(54) **Ausrüstungsteil für Fahrzeuge.**

(30) Priorität : **11.10.89 DE 3933946**

(43) Veröffentlichungstag der Anmeldung :
**17.04.91 Patentblatt 91/16**

(45) Bekanntmachung des Hinweises auf die
Patenterteilung :
**24.11.93 Patentblatt 93/47**

(84) Benannte Vertragsstaaten :
**BE DE ES FR GB IT SE**

(56) Entgegenhaltungen :
**WO-A-87/05656**
**DE-A- 2 631 712**

(73) Patentinhaber : **Gebr. Happich GmbH**
**Postfach 10 02 49**
**D-42097 Wuppertal (DE)**

(72) Erfinder : **Viertel, Lothar**
**Lilienstrasse 4**
**W-6636 Altforweiler (DE)**
Erfinder : **Welter, Patrick**
**Chemin de Romains**
**F-57730 La Chambre (DE)**

## Beschreibung

Die Erfindung bezieht sich auf ein Ausrüstungsteil für Fahrzeuge der im Oberbegriff des Anspruchs 1 näher erwähnten Art.

Ausrüstungsteile für Fahrzeuge, die aus einem kastenförmigen Gehäuse mit einem daran angeordneten Deckel oder Ausrüstungsteile für Fahrzeuge, die mit einem kastenförmigen Gehäuse und einem daran angeordneten Deckel ausgestattet sind, sind für verschiedene Verwendungszwecke und in verschiedene Ausführungsformen bekannt. Die kastenförmigen Gehäuse dienen beispielsweise zur Aufnahme von Utensilien der unterschiedlichsten Art oder insbesondere auch zur Aufnahme von Spiegeln für Make-up-Zwecke. Häufig sind die kastenförmigen Gehäuse auch mit einer Beleuchtungseinrichtung ausgestattet, um die darin untergebrachten Utensilien auch bei Dunkelheit finden bzw. um einen Spiegel auch bei Dunkelheit benutzen zu können. Normalerweise sind die kastenförmigen Gehäuse mit einem an einer Achse befestigten verschwenkbaren Deckel versehen, der zum Gehäuse hin und von diesem weggeschwenkt wird und dadurch relativ viel Öffnungsraum in Anspruch nimmt (vgl. z.B. DE-A-26 31 712). Daneben sind auch Ausrüstungsteile bekannt, die mit einem Schiebedeckel ausgerüstet sind, was aber häufig nicht erwünscht ist, zumal auch ein Schiebedeckel relativ viel Öffnungsraum in Anspruch nimmt und Führungen verlangt, die das kastenförmige Gehäuse zwangsläufig vergrößern (vgl. z.B. DE-A-33 24 169).

Die zu einem anderen Fachgebiet gehörende WO-A- 87/ 05656 zeigt und beschreibt ein Garagentor mit Präzisions-Gewichtsausgleich. Bei diesem bekannten Garagentor ist eine relativ aufwendige und aus vielen Einzelteilen bestehende Mechanik vorgesehen, mit deren Hilfe das Gewicht des Garagentors bei der Öffnungs- und Schließbewegung desselben ausgeglichen werden soll. Würde man dieses, nach innen zu öffnende Garagentor abändern, so daß es nach außen geöffnet werden könnte, so wäre nachteiligerweise die Mechanik sichtbar und schwer zu handhaben. Die Übertragung der sich aus der WO-A- 87/ 05656 ergebenden Lehre auf ein Fahrzeugausrüstungsteil würde hiernach nicht sinnvoll sein.

Der vorliegenden Erfindung liegt nun die Aufgabe zugrunde, ein Ausrüstungsteil der eingangs genannten Art hinsichtlich der Deckelanordnung zu verbessern und ein Ausrüstungsteil für Fahrzeuge zur Verfügung zu stellen, das zum Komfort und der Bequemlichkeit der Fahrgäste sowie zur Attraktivität des Fahrzeuginneren beiträgt.

Die zur Lösung dieser Aufgabe erfindungsgemäß vorgesehenen Maßnahmen sind im Kennzeichenteil des Patentanspruchs 1 angegeben. Die Unteransprüche kennzeichnen vorteilhafte Ausgestaltungen und Zweckmäßige Weiterbildungen der Erfindung.

Durch die erfindungsgemäßen Maßnahmen ist ein weiteres Fahrzeugausrüstungsteil geschaffen worden, das eine zusätzliche Erhöhung des Nutzens und der Attraktivität bietet, praktisch zu handhaben ist und ästhetisch anspricht. Insbesondere wird für den Deckel ein geringerer Öffnungsraum beansprucht als für einen nach außen über eine Achse verschwenkbaren oder als für einen nach außen über Führungen verschiebbaren Deckel.

Ausführungsbeispiele der Erfindung werden nachfolgend anhand der Zeichnung näher erläutert. Es zeigen

Fig. 1 ein Ausrüstungsteil in Ansicht in Form eines kastenförmigen Gehäuses mit Deckel, wobei der Deckel im geschlossenen Zustand dargestellt ist,

Fig. 2 einen Schnitt nach Fig. 1,

Fig. 3 das Ausrüstungsteil nach Fig. 1 mit geöffnetem Deckel,

Fig. 4 einen Schnitt IV - IV nach Fig. 3

Fig. 5 ein Ausrüstungsteil in Form einer Sonnenblende,

Fig. 6 ein Ausrüstungsteil in Form einer Kopfstütze und

Fig. 7 ein Ausrüstungsteil in Form einer Konsole.

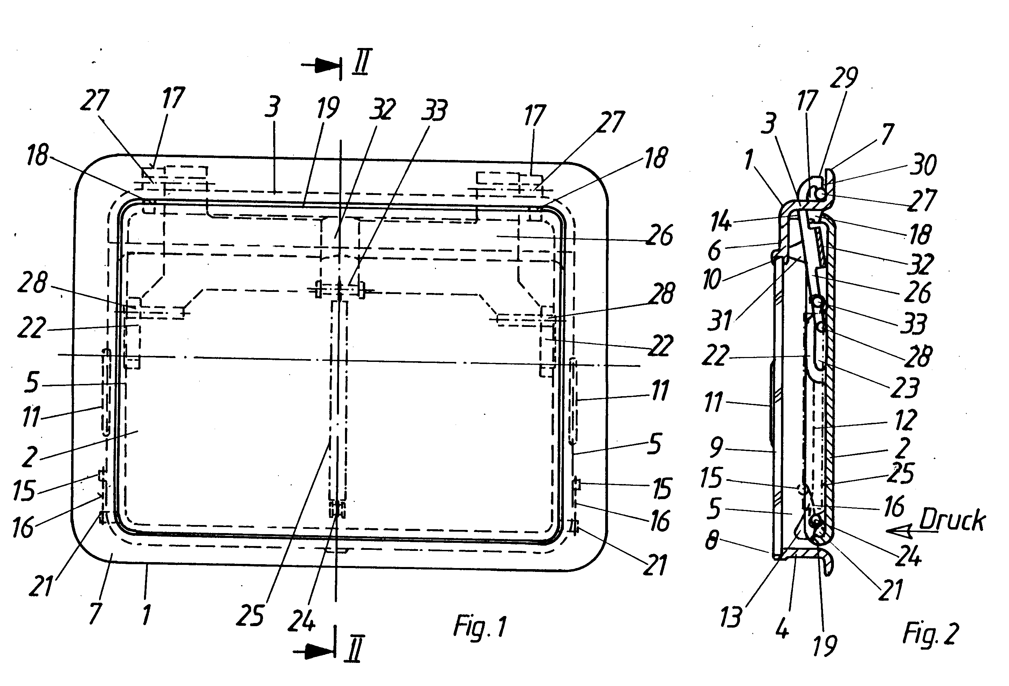

In den Fig. 1 bis 4 ist ein Ausrüstungsteil für Fahrzeuge dargestellt, das im wesentlichen aus einem kastenförmigen Gehäuse 1, einem Deckel 2 und einer noch näher zu beschreibenden Öffnungsmechanik besteht.

Das Gehäuse 1 besitzt eine im wesentlichen rechteckige Grundform und weist, in bezug auf die Zeichnung gesehen, eine obere Gehäusewand 3, eine untere Gehäusewand 4, Seitenwände 5 sowie einen Boden 6 auf. Die Wände 3 bis 5 gehen in einen umlaufenden Flansch 7 über. Im Boden 6 befindet sich eine fensterartige Öffnung 8, in der ein Spiegel 9 eingesetzt ist. Der Spiegel 9 wird in einer Aufnahmenut 10 und am Gehäuse 1 angeformten Klipsleisten 11 gehalten, wobei zu erwähnen ist, daß das Gehäuse 1 ebenso wie der Deckel 2 als Kunststoff-Spritzgußteil ausgeführt ist. Die Seitenwände 5 sind mit Kulissenführungen 12 in Form von Gleitnuten ausgebildet, die sich nahezu über die gesamte Länge der Seitenwände 5 erstrecken und im unteren Endbereich Erweiterungen 13 aufweisen.

Das Gehäuse 1 weist weiterhin in der oberen Seitenwand 3 desselben vorgesehene Schlitzöffnungen 14

2

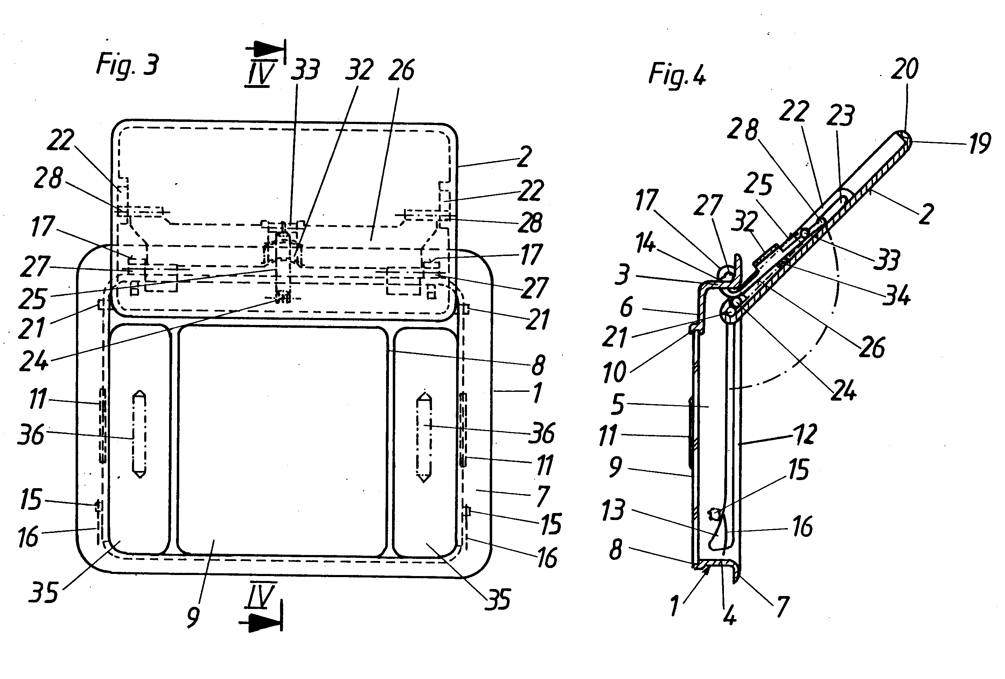

auf. Neben den Schlitzöffnungen 14 befinden sich an der oberen Seitenwand 3 des Gehäuses 1 angeformte Lageraufnahmen 17, die - wie Fig. 4 zeigt - als Lageraugen ausgebildet sein können. Im unteren Bereich der Seitenwände 5 sind Befestigungsvorsprünge 15 angeformt, die jeweils eine Feder 16, die zweckmäßigerweise als Blattfeder ausgebildet ist, tragen. In Fig. 4 ist eine der Federn 16, die in die Kulissenführung 12 eingreifen, einmal mit einer ausgezogenen Linie, welche die entspannte Federlage darstellt und einmal mit gestrichelter Linie, welche die gespannte Federlage darstellt, gezeigt. Die obere Gehäusewand 3 des Gehäuses 1 weist an den seitlichen Endbereichen angeformte Sperrzapfen 18 auf, die geringfügig weit ins Gehäuseinnere hineinragen.

Der Deckel 2, der dazu bestimmt ist, das Gehäuse 1 an der Gehäuseöffnungsseite in einer geschlossenen Lage zumindest bereichsweise freizulegen (Fig. 3 und 4), weist eine ebene Plattenform mit einem (vorzugsweise) umlaufenden Plattenrand 19 auf. Im oberen, parallel zur oberen Gehäusewand 3 des Gehäuses 1 verlaufenden Plattenrandbereich sind Öffnungen 20 ausgespart, in die die Sperrzapfen 18 einrasten, wenn sich der Deckel 2 in seiner geschlossenen Lage befindet, wie dies besonders deutlich aus Fig. 2 ersichtlich ist. Der Deckel 2 weist weiterhin in seinem unteren Randbereich zwei parallel zu diesem verlaufende, die seitlichen Deckelränder überragende Führungszapfen 21 auf, die in den Kulissenführungen 12 eine gleitbewegliche Anordnung finden. Ferner weist der Deckel 2 rückseitig angeformte Lageraugen 22 mit einer Lageraufnahme 23 auf, die rund oder je nach gewünschtem Öffnungswinkel des Deckel 2 - wie dargestellt - langlochartig ausgebildet sein können. Am unteren Randbereich ist der Deckel 2 an seiner Rückseite, etwa deckelmittig, mit einem daran angeformten Einhängezapfen 24 für ein Ende einer Öffnungsfeder 25 ausgebildet.

Der Deckel 2 ist zum einen über die Führungszapfen 21 und zum anderen über einen Gelenkkörper 26 sowohl gleit- als auch schwenkbeweglich mit dem Gehäuse 1 verbunden. Der Gelenkkörper 26, der zweckmäßigerweise als Kunststoff-Spritzgußteil ausgeführt ist, weist - in Draufsicht (vgl. Fig. 1) gesehen - eine angenähert H-förmige Ausbildung auf. Dabei sind die freien Endbereiche der senkrecht ausgerichteten H-Schenkel mit oberen Lagerzapfen 27 und unteren Lagerzapfen 28 ausgestattet, wobei es möglich ist, die Lagerzapfen 27, 28 einstückig mit dem Gelenkkörper 26 zu formen. Die oberen Bereiche der senkrecht ausgerichteten H-Schenkel sind durch die Schlitzöffnungen 14 in der oberen Gehäusewand 3 des Gehäuses geführt und die oberen Lagerzapfen 27 greifen in die Lageraufnahmen 17 des Gehäuses ein, so daß der Gelenkkörper 26 schwenkbeweglich mit dem Gehäuse 1 verbunden ist. Der Gelenkkörper 26 ist fernerhin schwenkbeweglich mit dem Deckel 2 verbunden, indem die unteren Lagerzapfen 28 desselben in die Lageraufnahmen 23 des Deckels 2 eingreifen. Legt man durch den Gelenkkörper 26 einen senkrechten Schnitt in Höhe der Lagerzapfen 27 und 28, so erkennt man eine krückstockähnliche oder angenähert P-förmige Querschnittsausbildung desselben mit einem offenen P-Bogen (vgl. insbesondere Fig. 2). Dabei bilden sowohl das freie Ende des P-Schenkels als auch das freie Ende des P-Bogens jeweils einen Lagerzapfen 27 bzw. 28. Jeder P-Bogen ist bereichsweise als Stützsteg 29 ausgebildet, der sich in der geschlossenen Deckellage an einer rückseitigen Flanschrippe 30 des Gehäuses 1 abzustützen vermag. Zusätzlich oder alternativ kann auch ein Stützkörper 31 vorgesehen sein, der wahlweise am Boden 6 des Gehäuses 1 oder am Gelenkkörper 26 anzuordnen bzw. anzuformen ist.

Der Gelenkkörper 26 besteht in seinem mittleren Bereich (horizontaler H-Schenkel) aus einem Brückenteil 32 und aus einer Achse 33, welch letztere zum Einhängen des zweiten Endes der Öffnungsfeder 25 dient. Bei der Öffnungsfeder 25 handelt es sich um eine Zugfeder, wozu zweckmäßigerweise eine Schraubenfeder eingesetzt wird, obgleich es auch denkbar ist, einen Gummizug od. dgl. zu verwenden. Die Öffnungsfeder 25 wird gespannt, wenn der Deckel 2 aus seiner geöffneten Lage in dei geschlossene Lage überführt wird, was durch leichten Druck auf den oberen Deckelrand bewirkt werden kann. Dabei gleiten dann die Führungszapfen 21 von oben nach unten durch die Kulissenführung 12 und spannen in der letzten Phase des Bewegungshubes die Feder 16. Gleichzeitig wird der Gelenkkörper 26 aus seiner ausgeschwenkten Lage (Fig. 4) in seine eingeschwenkte Lage (Fig. 2) bewegt. Der Schließdruck auf den Deckel 2, der ohne weiteres mit einem Finger einer menschlichen Hand aufgebracht werden kann, ist solange fortzusetzen bis die Sperrzapfen 18 am Gehäuse 1 in dei Öffnungen 20 des Deckels 2 einrasten. Danach wird die Arretierung des Deckels 2 durch die aus Sperrzapfen 18 und Öffnungen 20 bestehende Verriegelung im Zusammenwirken mit den, den Deckel 2 in Schließstellung belastenden Federn 16 übernommen.

Die Verriegelung des Deckels 2 ist durch geringfügiges Eindrücken (Antippen) des Deckels 2 gegen die Kraft der Federn 16, die dabei ebenso wie die Führungszapfen 21 in die Erweiterungen 13 der Kulissenführungen 12 eindringen, lösbar. Beim Eindrücken des Deckels 2 macht dieser, wegen der vorgesehenen Abstützung des Gelenkkörpers 26 eine Kippbewegung um die unteren Gelenkzapfen 28 des Gelenkkörpers 26, die ausreicht die Verriegelung zu lösen. Der Deckel 2 ist also über eine Tippautomatik zu öffnen, wobei nach dem Lösen der Verriegelung die Zugfeder 25 die Öffnungsbewegung übernimmt. Damit die Feder 25 bei ihrer Arbeit nicht behindert wird, ist der Brückenteil 32 aus der Ebene des Gelenkkörpers 26 herausgewölbt. Die Öffnungsbewegung ist abgeschlossen, wenn der Deckel 2 seine in Fig. 4 gezeigt Lage (der Öffnungswinkel beträgt hier etwa 135 Grad) einnimmt. Natürlich sind auch andere Winkelstellung (kleinere oder größere) für den geöffneten Deckel 2 möglich.

Um einem zu schnellen Öffnen und hartem Anschlagen des Deckels 2 entgegenzuwirken, können im Bereich beispielsweise der Gelenkausbildungen 17, 27 Dämpfungs- oder Bremsmittel vorgesehen sein. Beispielsweise kann man reibungserhöhende Maßnahmen vorsehen oder auch kleine Fettbremsen einbauen. Gute Ergebnisse lassen sich schon erzielen, wenn zwischen den in der geöffneten Lage des Deckels 2 einander benachbarte Flächen des Deckels und des Gelenkkörpers 26 Anschlagpuffer 34 (Fig. 4), die aus Filz oder einem sonstigen Dämpfungsmaterial bestehen können, angeordnet sind.

Wie schon weiter oben erwähnt, ist das kastenförmigen Gehäuse 1 mit einem Spiegel 9 ausgerüstet. Damit der Spiegel 9 auch bei Dunkelheit benutzt werden kann, gehört bevorzugterweise zum Gehäuse 1 eine nicht näher dargestellte Beleuchtungseinrichtung. In Fig. 3 ist angedeutet, daß neben dem Spiegel 9 Leuchtfenster 35 installiert sein können, unter denen sich elektrische Lichtquellen 36, beispielsweise Soffittenlampen befinden. Die aus lichtdurchlässigem Material bestehenden Leuchtfenster können gegenüber dem Spiegel 9 höhenversetzt im Gehäuse 1 angeordnet sein. Zur elektrischen Stromversorgung der Lichtquellen 36 kann beispielsweise eine auswechselbar im Gehäuse 1 anzuordnende handelsübliche Batterie dienen.

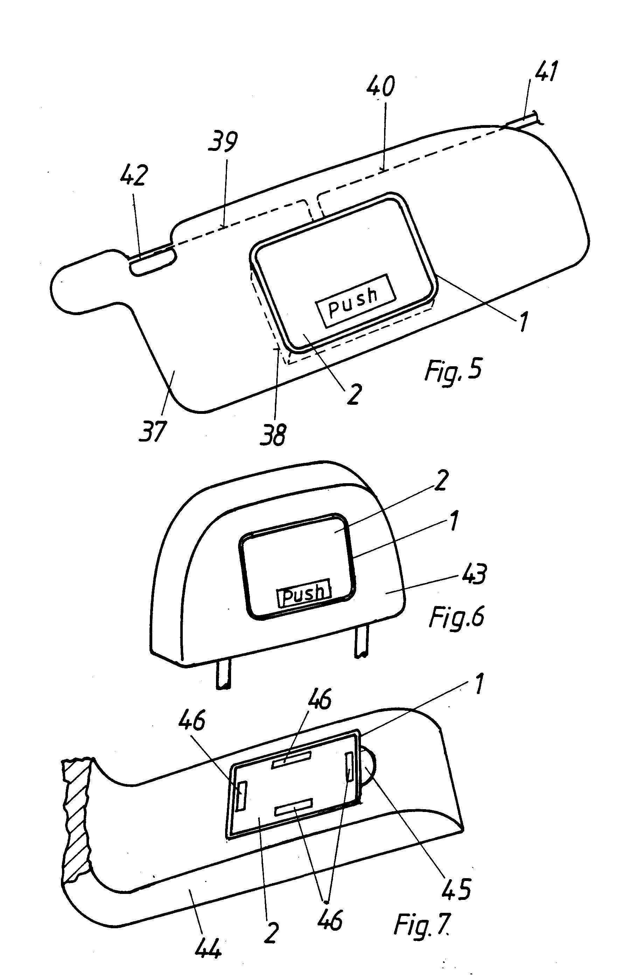

Fig. 5 zeigt ein Fahrzeugausrüstungsteil in Form einer Sonnenblende 37, die mit einem Ausrüstungsteil, wie es vorstehend anhand der Fig. 1 bis 4 ausführlich erläutert wurde, ausgestattet ist. Die Sonnenblende 37 weist auf der, dem Betrachter zugewandten Breitseite eine Ausnehmung 38 auf, in der das Gehäuse 1 so angeordnet und befestigt werden kann, daß der Deckel 2 bündig oder nahezu bündig mit der Außenfläche der Sonnenblende 37 abschließt. Wenn das in die Sonnenblende 37 integrierte Zubehörteil mit einer Beleuchtungseinrichtung ausgerüstet ist, wie es bevorzugt vorgesehen ist, so kann die elektrische Stromversorgung durch die allgemeine Fahrzeugelektrik erfolgen. Für diesen Zweck sind im Sonnenblendenkörper elektrische Leiter 39, 40 eingebettet, die mit Plus und Masse sowie mit den Lichtquellen verbunden sind. Die elektrischen Leiter können durch die Hauptachse 41 und/oder durch die Gegenlagerachse 42 der Sonnenblende 37 geführt sein. Zum Ein- und Ausschalten der Lichtquellen können im einzelnen nicht dargestellte Schalter vorgesehen sein, welche durch die Schwenkbewegung der Sonnenblende 37 und/oder durch die Öffnungs- / Schließbewegung des Deckels 2 und/oder manuell zu betätigen sind.

Fig. 6 zeigt ein Fahrzeugausrüstungsteil in Form einer Kopfstütze 43, die - ebenso wie die Sonnenblende 37 nach Fig. 5 - mit einem Ausrüstungsteil ausgestattet ist, wie es weiter oben anhand der Fig. 1 bis 4 ausführlich erläutert worden ist. Ähnliches zeigt Fig. 7 bei einem Fahrzeugsausrüstungsteil in Form einer Konsole 44. Insbesondere im Fall des Ausführungsbeispiels nach Fig. 7 besteht die Möglichkeit, ein Ausrüstungsteil nach den Fig. 1 bis 4 herausnehmbar in einer Ausnehmung der Konsole 44 anzuordnen, was nicht unerwünscht ist. Ein Herausnehmen wird durch eine Griffmulde 45 erleichtert. In Fig. 7 ist auch durch Druckpunkte 46 angedeutet, daß es ohne weiteres möglich ist, den Deckel 2 wahlweise nach links, rechts, oben oder unten zu öffnen. Diese Möglichkeit besteht natürlich auch bei dem Ausrüstungsteil, wie es in den Fig. 1 bis 6 gezeigt ist.

Bezugszeichenliste

| | |
|---|---|
| 1 Gehäuse | 26 Gelenkkörper |
| 2 Deckel | 27 Lagerzapfen (oben) |
| 3 obere Gehäusewand | 28 Lagerzapfen (unten) |
| 4 untere Gehäusewand | 29 Stützsteg |
| 5 Seitenwände | 30 Flanschrippe |
| 6 Boden | 31 Stützkörper |
| 7 Flansch | 32 Brückenteil |
| 8 fensterartige Öffnung | 33 Achse |
| 9 Spiegel | 34 Anschlagpuffer |
| 10 Aufnahmenut | 35 Leuchtfenster |
| 11 Klipsleisten | 36 Lichtquellen |
| 12 Kulissenführungen | 37 Sonnenblende |
| 13 Erweiterungen | 38 Ausnehmung |
| 14 Schlitzöffnungen | 39 elektr. Leiter |
| 15 Befestigungsvorsprünge | 40 elektr. Leiter |
| 16 Feder | 41 Hauptachse |
| 17 Lageraufnahmen | 42 Gegenlagerachse |
| 18 Sperrzapfen | 43 Kopfstütze |
| 19 Plattenrand | 44 Konsole |
| 20 Öffnungen | 45 Griffmulde |
| 21 Führungszapfen | 46 Druckpunkte |
| 22 Lageraugen | |
| 23 Lageraufnahme | |
| 24 Einhängezapfen | |
| 25 Öffnungsfeder | |

**Patentansprüche**

1. Ausrüstungsteil, wie Sonnenblende, Kopfstütze, Konsole od. dgl. für Fahrzeuge, mit einer darin ausgebildeten Ausnehmung (38), einem in die Ausnehmung (38) eingesetzten kastenförmigen Gehäuse (1) und einem Deckel (2), der mit dem Gehäuse (1) beweglich verbunden ist, um in einer geschlossenen Lage das Gehäuse (1) zumindest bereichsweise zu verdecken und in einer geöffneten Lage, in der der Deckel nach außen vom Gehäuse (1) absteht, und das Gehäuse schräg überragt, das Gehäuse (1) zumindest bereichsweise freizulegen bzw. zugänglich zu machen, dadurch gekennzeichnet, daß der Deckel (2) an einem ersten Randbereich über diesen Randbereich jeweils nach außen überragende Führungszapfen (21) und an einem diesem abgewandten zweiten Randbereich über einen Gelenkkörper (26) sowohl gleit- als auch schwenkbeweglich mit dem Gehäuse (1) verbunden ist, so daß der Deckel (2) durch eine Schiebebewegung bei der der zweite Randbereich eine Kurvenbahn beschreitet, in eine das Gehäuse schräg überragende Öffnungsstellung bewegbar ist, wobei die Führungszapfen (21) in Kulissenführungen (12)

EP 0 422 446 B1

eingreifen, die in einander gegenüberliegenden Gehäusewänden (5) ausgebildet sind, und wobei der Gelenkkörper (26) obere, am Gehäuse (1) angelenkte Lagerzapfen (27), die parallel zu den Führungszapfen (21) ausgerichtet sind und hierzu parallel verlaufende untere, rückseitig am Deckel (2) angelenkte Lagerzapfen (28) aufweist.

2. Ausrüstungsteil nach Anspruch 1, dadurch gekennzeichnet, daß der Deckel (2) aus seiner geschlossenen Lage nach dem Lösen einer Verriegelung durch die Kraft einer Öffnungsfeder (25) in seine geöffnete Lage bewegbar ist.

3. Ausrüstungsteil nach Anspruch 2, dadurch gekennzeichnet, daß die Verriegelung durch geringfügiges Eindrücken des Deckels (2) gegen die Kraft mindestens einer, den Deckel (2) in der Verriegelungsstellung haltenden Feder (16) lösbar ist.

4. Ausrüstungsteil nach wenigstens einem der Ansprüche 1 bis 3, dadurch gekennzeichnet, daß zwei den Deckel (2) in einer Verriegelungsstellung haltende Federn (16) vorgesehen sind, die in der geschlossenen Lage des Deckels (2) die Führungszapfen (21) belasten und daß die Kulissenführungen (12) Erweiterungen (13) aufweisen, um ein geringfügiges Eindrücken des Deckels (2) in Höhe der Führungszapfen (21) zu ermöglichen.

5. Ausrüstungsteil nach wenigstens einem der Ansprüche 1 bis 4, dadurch gekennzeichnet, daß als Verriegelung zumindest ein am Gehäuse (1) angeordneter Sperrzapfen (18) vorgesehen ist, der in eine Sperrzapfenöffnung (20) des Deckels (2) lösbar einzurasten vermag, wobei die Verriegelung an der den Führungszapfen (21) gegenüberliegenden Seite des Gehäuses (1) bzw. Deckels (2) angeordnet ist und daß der Deckel (2) zwischen den Führungszapfen (21) einerseits und der Verriegelung andererseits kippachsenartig abgestützt ist.

6. Ausrüstungsteil nach wenigstens einem der Ansprüche 1 bis 5, dadurch gekennzeichnet, daß der Gelenkkörper (26) in seinem mittleren Bereich mit einer Achse (33) zur einendigen Befestigung der anderendig etwa in Höhe der Führungszapfen (21) am Deckel (2) befestigten Öffnungsfeder (25) ausgebildet ist.

7. Ausrüstungsteil nach wenigstens einem der Ansprüche 1 bis 6, dadurch gekennzeichnet, daß die Öffnugsfeder (25) eine als Schraubenfeder ausgebildete Zugfeder ist.

8. Ausrüstungsteil nach wenigstens einem der Ansprüche 1 bis 7, dadurch gekennzeichnet, daß der Gelenkkörper (26) jeweils im Bereich seiner Anlenkstellen am Gehäuse (1) und Deckel (2) eine im Querschnitt gesehen P-förmige Ausbildung mit offenem P-Bogen aufweist, wobei sowohl das freie Ende des P-Schenkels als auch das freie Ende des P-Bogens als Lagerzapfen (27 bzw. 28) ausgeführt sind.

9. Ausrüstungsteil nach wenigstens einem der Ansprüche 1 bis 8, dadurch gekennzeichnet, daß der Gelenkkörper (26) in der geschlossenen Lage des Deckels (2) gegenüber dem Gehäuse (1) abgestützt ist, so daß die unteren Lagerzapfen (28) desselben den Deckel (2) zwecks Entriegelung auch kippgelenkartig abzustützen vermögen.

10. Ausrüstungsteil nach wenigstens einem der Ansprüche 1 bis 9, dadurch gekennzeichnet, daß der Gelenkkörper (26) mit die oberen Lagerzapfen (27) tragenden Bereichen Schlitzöffnungen (14) in der den Sperrzapfen (18) aufweisenden Gehäusewand (3) durchsetzt und mit seinen oberen, am freien Ende der P-Bogen befindlichen Lagerzapfen (27) in auf der Gehäusewand (3) befindlichen Lageraufnahmen (17) einrastbar ist.

11. Ausrüstungsteil nach wenigstens einem der Ansprüche 1 bis 10, dadurch gekennzeichnet, daß die oberen, am Gehäuse (1) angelenkten Lagerzapfen (27) mit einer Brems- oder Dämpfungseinrichtung versehen sind.

12. Ausrüstungsteil nach wenigstens einem der Ansprüche 1 bis 11, dadurch gekennzeichnet, daß zwischen den in der geöffneten Lage des Deckels (2) einander benachbarten Flächen des Deckels (2) und des Gelenkkörpers (26) Anschlagpuffer (34) angeordnet sind.

13. Ausrüstungsteil nach wenigstens einem der Ansprüche 1 bis 12, dadurch gekennzeichnet, daß die Lageraufnahmen (23) am Deckel (2) für die unteren Lagerzapfen (28) des Gelenkkörpers (26) langlochartig ausgeführt sind.

14. Ausrüstungsteil nach wenigstens einem der Ansprüche 1 bis 13, dadurch gekennzeichnet, daß das Gehäuse (1) mit einem Spiegel (9) ausgerüstet ist.

15. Ausrüstungsteil nach Anspruch 10, dadurch gekennzeichnet, daß sich der Spiegel (9) im Bodenbereich (6) des Gehäuses (1) befindet.

16. Ausrüstungsteil nach Anspruch 15, dadurch gekennzeichnet, daß der Boden (6) des Gehäuses (1) eine fensterartige Öffnung (8) und an den Rändern der Öffnung Rastmittel (10, .11) zum Halten des Spiegels (9) aufweist.

17. Ausrüstungsteil nach wenigstens einem der Ansprüche 1 bis 16, dadurch gekennzeichnet, daß das Gehäuse (1) mit einem Spiegel (9) und mit einer Beleuchtungseinrichtung für den Spiegel (9) ausgerüstet ist, wobei die Beleuchtungseinrichtung zumindest eine, von einer elektrischen Kraftquelle speisbare elektrische Lichtquelle, Mittel zum Ein- und Ausschalten der Lichtquelle (36) und zumindest eine Lichtquellenabdeckung (35) aus lichtdurchlässigen Material umfaßt.

## Claims

1. An interior fitting, such as a sun visor, head support, console or such like for vehicles with a recess (38) therein, a box-type housing (1) arranged within the recess (38) and a cover (2), which is connected to the housing (1) in a manner permitting movement to cover at least part of the housing (1) in a closed position and to lay bare at least part of, or allow access to, the housing (1) when in an open position with the cover at a distance outside of the housing (1) and diagonally projecting over it, characterised in that the cover (2) has guide pins (21) at a first edge area which project outwards beyond this edge area, and that the cover (2) is connected to the housing (1) at a second edge area opposite the said guide pins (21) via an articulated body (26) in a manner which permits both sliding and swivel movements, so that the cover (2) is movable into an open position diagonally projecting beyond the housing through a sliding movement in which the second edge area follows a curved path, whereby the guide pins (21) engage in link guides (12) which are formed in opposing housing walls (5) and whereby the articulated body (26) has upper bearing pins (27) articulated on the housing (1) and arranged parallel to the guide pins (21) and bearing pins (28) articulated on the rear of the cover (2) and which run parallel to the guide pins (21).

2. An interior fitting according to Claim 1, characterised in that the cover (2) may be moved from its closed position to its open position following the release of a catch by the force of an opening spring (25).

3. An interior fitting according to Claim 2, characterised in that the catch may be released by the application of slight pressure to the cover (2) against the force of at least one spring (16) holding the cover (2) in its closed position.

4. An interior fitting according to any one of Claims 1 to 3, characterised in that the two springs (16) maintaining the cover (2) in a closed position exert a force on the guide pins (21) when the cover (2) is in a closed position and that the link guides (12) have extensions (13), to enable the cover (2) to be pressed in slightly at the height of the guide pins (21).

5. An interior fitting according to any one of Claims 1 to 4, characterised in that at least one limiting pin (18) arranged on the housing (1) serves as the catch and may be engaged and disengaged in a limiting pin aperture (20) in the cover (2) whereby the catch is arranged on the side of the housing (1) or cover (2) facing the guide pins (21) and that the cover (2) is braced between the guide pins (21) and the catch in a tilting axis manner.

6. An interior fitting according to any one of Claims 1 to 5, characterised in that the articulated body (26) has an axle (33) arranged in its central region for securing one end of the opening spring (25), the other end of which is secured to the cover (2) at approximately the height of the guide pins (21).

7. An interior fitting according to any one of Claims 1 to 6, characterised in that the opening spring (25) is a tension spring in the form of a helical spring.

8. An interior fitting according to any one of Claims 1 to 7, characterised in that the articulated body (26),

7

viewed cross-sectionally, has a P-shaped section with an open P-arch in the region of its articulation points to the housing (1) and cover (2), whereby both the free end of the P-limb and the free end of the P-arch are formed as bearing pins (27 or 28).

9. An interior fitting according to any one of Claims 1 to 8, characterised in that the articulated body (26) is braced against the housing (1) when the cover (2) is in its closed position so as to permit the lower bearing pins (28) to support the cover (2) in a tilting joint manner to enable catch release.

10. An interior fitting according to any one of Claims 1 to 9, characterised in that the articulated body (26), with its upper regions which carry bearing pins (27), projects through slit apertures (14) in the housing wall (3) which accommodates the limiting pins (18) and can engage, via its upper bearing pins (27) arranged on the free end of the P-arch, in the bearing holders (17) on the housing wall (3).

11. An interior fitting according to any one of Claims 1 to 10, characterised in that the upper bearing pins (27), articulated to the housing (1), are provided with a braking or dampening device.

12. An interior fitting according to any one of Claims 1 to 11, characterised in that limit buffers (34) are arranged between neighbouring surfaces of the cover (2) and articulated body (26) when the cover (2) is in the open position.

13. An interior fitting according to any one of Claims 1 to 12, characterised in that the bearing holders (23) on the cover (2) for the lower bearing pins (28) of the articulated body (26) are oblong in shape.

14. An interior fitting according to any one of Claims 1 to 13, characterised in that the housing (1) is provided with a mirror (9).

15. An interior fitting according to Claim 10, characterised in that the mirror (9) is positioned in the bottom region of the housing (1).

16. An interior fitting according to Claim 15, characterised in that the bottom (6) of the housing (1) has a window-like aperture (8) and holding devices (10, 11) at the edges of the aperture to hold the mirror (9).

17. An interior fitting according to any one of Claims 1 to 16, characterised in that the housing (1) is provided with a mirror (9) and an illumination device for the mirror (9), whereby the illumination device has at least one light source which runs off an electrical power source, together with a means of turning the light source (36) on and off and at least one light source cover (35) of a light transmitting material.

**Revendications**

1. Accessoire, tel que pare-soleil, appui-tête, console ou analogue, pour véhicules, avec un évidement (38) ménagé en son sein, un boîtier (1) en forme de caisson, inséré dans l'évidement (38), et un couvercle (2), relié mobile au boîtier (1), afin, en position fermée, de recouvrir le boîtier (1) au moins par zones et, en position ouverte, dans laquelle le couvercle fait saillie du boîtier (1) vers l'extérieur et dépasse obliquement du boîtier, de libérer le boîtier (1) au moins par zones, ou de le rendre accessible, caractérisé en ce que le couvercle (2) est relié au boîtier (1), tant de façon coulissante que pivotante, sur une première zone de bordure, par l'intermédiaire d'un tourillons de guidage (21) dépassant chaque fois de cette zone de bordure vers l'extérieur et, sur une deuxième zone de bordure, opposée au tourillon de guidage (21), par l'intermédiaire d'un corps d'articulation (26), de telle façon que le couvercle (2) soit déplaçable dans une position d'ouverture, dépassant obliquement le boîtier, au moyen d'un déplacement de coulissement, lorsque la deuxième zone de bordure décrit une trajectoire incurvée, où les tourillons de guidage (21) s'engagent dans des guidages coulissants (12), réalisés dans des parois de boîtier (5) mutuellement opposées, et où le corps d'articulation (26) présente des tourillons de palier supérieurs (27), articulés sur le boîtier (1), orientés parallèlement au tourillons de guidage (21) et présentant à cette fin des tourillons de palier inférieurs (28), s'étendant parallèlement à ceux-ci et articulés en face arrière du couvercle (2).

2. Accessoire selon la revendication 1, caractérisé en ce que le couvercle (2) est déplaçable de sa position fermée à sa position ouverte, après relachement d'un verrouillage, au moyen de la force d'un ressort d'ouverture (25).

3. Accessoire selon la revendication 2, caractérisé en ce que le verrouillage est pouvant être relâché au moyen d'un léger enfoncement du couvercle (2), à l'encontre de la force d'au moins un ressort (16), maintenant le couvercle (2) en position de verrouillage.

4. Accessoire selon au moins l'une des revendications 1 à 3, caractérisé en ce que sont prévues deux ressorts (16), maintenant le couvercle (2) dans une position de verrouillage et sollicitant les tourillons de guidage (21) lorsque le couvercle (2) est dans la position fermée et en ce que les guidages coulissants (12) présentent des élargissements (13) afin de permettre un léger enfoncement du couvercle (2) au niveau des tourillons de guidage (21).

5. Accessoire selon au moins l'une des revendications 1 à 4, caractérisé en ce qu'est prévu à titre de verrouillage au moins un tourillon de blocage (18), disposé sur le boîtier (1) et permettant un encliquetage désolidarisable dans une ouverture de tourillon de guidage (20) du couvercle (2), le verrouillage étant disposé du côté, opposé au tourillon de guidage (21), du boîtier (1), ou de couvercle (2) et en ce que le couvercle (2) prend appui, d'un côté entre les tourillons de guidage (21) et le verrouillage de l'autre côte, à la façon d'un axe de basculement.

6. Accessoire selon au moins l'une des revendications 1 à 5, caractérisé en ce que le corps d'articulation (26) est réalisé dans sa zone médiane avec un axe (33), en vue d'une fixation à une extrémité du ressort d'ouverture (25) fixe, à l'autre extrémité sur le couvercle (2), à peu près au niveau du tourillon de guidage (21).

7. Accessoire selon au moins l'une des revendications 1 à 6, caractérisé en ce que le ressort d'ouverture (25) est un ressort de traction réalisé sous forme de ressort hélicoïdal.

8. Accessoire selon au moins l'une des revendications 1 à 7, caractérisé en ce que le corps d'articulation (26) présente, chaque fois dans la zone de ses points d'articulation sur le boîtier (1) et le couvercle (2), une configuration dont la section transversale est en forme de P, avec un coude de P ouvert, où tant l'extrémité libre de la branche du P qu'également l'extrémité libre du coude de P sont réalisés sous forme de tourillons de palier (28 ou 28).

9. Accessoire selon au moins l'une des revendications 1 à 8, caractérisé en ce que, dans la position fermée du couvercle (2), le corps d'articulation (26) prend appui contre le boîtier (1), de telle façon que les tourillons de palier inférieurs (28) de celui-ci permettent au couvercle (2) de prendre appui également à la façon d'une articulation basculante, en vue du déverrouillage.

10. Accessoire selon au moins l'une des revendications 1 à 9, caractérisé en ce que le corps d'articulation (26), avec les zones portant les tourillons de palier supérieurs (27), est traversé par des ouvertures en forme de fente (14) ménagées dans la paroi de boîtier (3) présentant les tourillons de palier supérieurs (27) et peut s'encliqueter, par son tourillon de palier supérieur (27), se trouvant sur l'extrémité libre du coude de P, dans des logements de palier (17) se trouvant sur la paroi de boîtier (3).

11. Accessoire selon au moins l'une des revendications 1 à 10, caractérisé en ce que les tourillons de palier supérieurs (27), articulés sur le boîtier (1), sont pourvus d'un dispositif de freinage et d'amortissement.

12. Accessoire selon au moins l'une des revendications 1 à 11, caractérisé en ce que des tampons de butée (34) sont disposés entre les faces, voisines les unes des autres lorsque le couvercle (2) est dans la position ouverte, du couvercle (2) et du corps d'articulation (26).

13. Accessoire selon au moins l'une des revendications 1 à 12, caractérisé en ce que les logements de palier (23), réalisés sur le couvercle (2) pour les tourillons de palier inférieurs (28) du corps d'articulation (26), sont configurés en trous allongés.

14. Accessoire selon au moins l'une des revendications 1 à 13, caractérisé en ce que le boîtier (1) est équipé d'un miroir (9).

15. Accessoire selon la revendication 10, caractérisé en ce que le miroir (9) se trouve dans la zone de fond (6) du boîtier (1).

16. Accessoire selon la revendication 15, caractérisé en ce que le fond (6) du boîtier (1) présente une ouverture (8) en forme de fenêtre et, sur les bords de l'ouverture, des moyens d'encliquetage (10,11), pour maintenir le miroir (9).

17. Accessoire selon au moins l'une des revendications 1 à 16, caractérisé en ce que le boîtier (1) est équipé d'un miroir (9) et d'un dispositif d'éclairage pour le miroir (9), où le dispositif d'éclairage comprend au moins une source lumineuse élastique, pouvant être alimentée par une source électrique, des moyens pour la mise en service et hors service de la source lumineuse (36) et au moins un recouvrement de source lumineuse (35), en matériau translucide.

Fig. 2

Fig. 1

Fig. 4

Fig. 3

*Fig. 5*

*Fig.6*

*Fig. 7*